(19) Europäisches Patentamt
European Patent Office
Office européen des brevets

(11) EP 2 573 150 A1

# (12) EUROPEAN PATENT APPLICATION

(43) Date of publication:
**27.03.2013 Bulletin 2013/13**

(21) Application number: **11182785.3**

(22) Date of filing: **26.09.2011**

(51) Int Cl.:
***C09J 7/00*** *(2006.01)* ***C09J 7/02*** *(2006.01)*
***C09J 133/04*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **3M Innovative Properties Company**
**Saint Paul, MN 55133-3427 (US)**

(72) Inventors:
- **Traser, Steffen**
  **41453 Neuss (DE)**
- **Forster, Jan D.**
  **41453 Neuss (DE)**
- **Seth, Jayshree**
  **St. Paul, MN Minnesota 55133-3427 (US)**
- **Weikel, Arlin Lee**
  **St. Paul, MN Minnesota 55133-3427 (US)**
- **Kavanagh, Maureen Ann**
  **St. Paul, MN Minnesota 55133-3427 (US)**

(74) Representative: **Voortmans, Gilbert J.L. et al**
**3M Europe S.A./N.V.**
**OIPC**
**Hermeslaan 7**
**1831 Diegem (BE)**

## (54) Multilayer pressure-sensitive adhesive films with pressure-sensitive adhesives comprising (meth)acrylate esters of 2-alkyl alkanols

(57) The present invention is directed to a multilayer pressure sensitive adhesive (PSA) film, having a first pressure sensitive adhesive layer and at leas t one opposing layer, characterized in that the first pressure sensitive adhesive layer comprises a pressure-sensitive adhesive composition comprising (co)polymers of :
a) (meth)acrylate ester of 2 -alkyl alkanols wherein the molar carbon number average of said 2-alkyl alkanols is 12 to 32; and optionally
b) (meth)acrylate esters of $C_{1-12}$ alkanols; wherein the molar carbon number average of the alkanols of the a) and b) (meth)acrylic acid esters is 12 to 32.

The invention is also directed to a method for the manufacturing of such a multilayer PSA film and its use.

EP 2 573 150 A1

**Description**

## Technical Field of the Invention

The present invention relates to a multilayer pressure sensitive adhesive (PSA) film, having a first pressure sensitive adhesive layer and at least one opposing layer. This invention provides also a method for production of such a multilayer PSA film.

## Background of the Invention

Pressure-sensitive tapes are virtually ubiquitous in the home and workplace. In its simplest configuration, a pressure-sensitive tape comprises an adhesive and a backing, and the overall construction is tacky at the use temperature and adheres to a variety of substrates using only moderate pressure to form the bond. In this fashion, pressure-sensitive tapes constitute a complete, self -contained bonding system.

According to the Pressure -Sensitive Tape Council, p ressure-sensitive adhesives (PSAs) are known to possess properties including the following: (1) aggressive and permanent tack, (2) adherence with no more than finger pressure, (3) sufficient ability to hold onto an adherend, and (4) sufficient cohesive strength to be removed cleanly from the adherend. Materials that have been found to function well as PSAs include polymers designed and formulated to exhibit the requisite viscoelastic properties resulting in a desired balance of tack, peel adhesion, and shear holding power. PSAs are characterized by being normally tacky at room temperature (e.g., 20°C). PSAs do not embrace compositions me rely because they are sticky or adhere to a surface.

These requirements are assessed generally by means of tests which are designed to individually measure tack, adhesion (peel strength), and cohesion (shear holding power), as noted in A.V. Pocius in Adhes ion and Adhesives Technology: An Introduction, 2nd Ed., Hanser Gardner Publication, Cincinnati, OH, 2002. These measurements taken together constitute the balance of properties often used to characterize a PSA.

With broadened use of pressure-sensitive tapes over the years, performance requirements have become more demanding. Shear holding capability, for example, which originally was intended for applications supporting modest loads at room temperature, has now increased substantially for many applications in terms of operating temperature and load. So-called high performance pressure-sensitive tapes are those capable of supporting loads at elevated temperatures for 10,000 minutes. Increased shear holding capability has generally been accomplished by crosslinking the PSA, although considerable care must be exercised so that high levels of tack and adhesion are re tained in order to retain the aforementioned balance of properties.

There are a wide variety of pressure sensitive adhesive (PSA) materials available today that include natural crude or synthetic rubbers, block copolymers, and acrylic ester based polymeric compositions. Acrylic ester PSAs in particular have been the focus of a great deal of development over the last half century as the performance dem ands for PSAs have increased. Acrylic based PSAs may be closely tailored to provide a number of desired attributes such as elasticity, tackiness, transparency, resistance to oxidation and sunlight, etc., as well as have the necessary degree of adhesion and cohesion for demanding tape applications.

Central to all PSAs is a desired balance of adhesion and cohesion that is often achieved by optimizing the physical properties of the acrylic elastomer, such as glass transition temperature and modulus. For example, if the glass transition temperature ($T_g$) or modulus of the elastomer is too high and above the Dahlquist criterion for tack (storage modulus of 3 x $10^6$ dynes/$cm^2$ at room temperature and oscillation frequency of 1 Hz), the material will not be tacky and is not useful by itself as a PSA material. Often in this case, low molecular weight, high $T_g$ resin polymers (tackifiers) or low molecular weight, low $T_g$ polymers (plasticizers) are often used to modulate the $T_g$ and modulus into an optimal PSA range.

Acrylic ester PSAs of today are typically an elastomeric polymer comprised primarily of a low $T_g$ non-polar monomer, as well as a small amount of polar acrylic monomer such as acrylic acid. Two widely used low $T_g$ acrylates in PSAs are 2-ethylhexyl acrylate (EHA) and isooctyl acrylate (IOA), each providing an alkyl chain of eight carbon atoms ($C_8$). Longer or shorter alkyl chains have a number of disadvantages in terms of PSA performance. For example, shorter alkyl chain (e.g. butylacrylate-$C_4$) will significantly increase both the $T_g$ and modulus of the elastomer, possibly increasing the room temperature storage modulus above 3 x $10^6$ dynes/$cm^2$. Alternatively, longer alkyl chains (e.g. lauryl acrylate-$C_{12}$) can lead to crystalline groups within the polymer that will also significantly reduce it degree of tack.

From US 4,818,610 (Zimmerman et al.) a pressure -sensitive adhesive tape comprising a plurality of superimposed layers is known, wherein at least one outer layer is a pressure-sensitive adhesive layer. The pressure-sensitive adhesive layer can be obtained from a polymerizable mixture containing acrylates.

Without contesting the technical advantages associated with the pressure sensitive adhesive films known in the art, there is still a need for multilayer PSA film s having improved adh esion characteristics, in particular with respect to peel forces and shear resistance.

## Summary of the Invention

The pressure sensitive materials known from the prior art do often not provide sufficient tack on so -called LSE substrate s, i.e. substrates having a low surface energy like a polyolefin surface or a clear coat surface , in particular a clear coat for vehicles like a car. Especially, the peel force resistance on these difficult -to-bond substrates do often not fulfill the requirements, in particular under environmental stress like altering temperatures and humidity. This deficit may in part be overcome by the addition of higher amounts of tackifiers. However, the excessive use of tackifiers comes often with the drawback that the shear resistance is lowered due to the plasticizing effect of tackifiers. Also, tackifiers may migrate into the substrate to which the adhesive tape is bonded and may lead to an undesired colour change or reduction of stability.

Another problem of tackified pressure -sensitive adhesives containing conventional (meth)acrylic -based elastomeric materials is that these formulations may appear cloudy, demonstrating a loss in the characteristic transparency of the conventional (meth)acrylic-based elastomeric materials. The cloudiness is an indication of limited or incomplete compatibility of the tackifier and the elastomeric material. The reduced compatibility can lead to a degradation of adhesive properties, as evidenced by a loss of tack or reduced peel adhesion on aging.

Hence it is an object of this invention to provide a multilayer PSA film of the above-mentioned type which combines good peel forces on LSE (low surface energy) substrates and a high shear resistance without the necessity of excessive tackifier use. This objective is solved by a multilayer pressure sensitive adhesive (PSA) film according to the present invention.

According to one aspect, the present invention relates to a multilayer pressure sensitive adhesive (PSA) film having a first pressure sensitive adhesive layer and at least one opposing layer, wherein the first pressure sensitive adhesive layer comprises a pressure-sensitive adhesive composition comprising (co)polymers of :

a) (meth)acrylate ester of 2 -alkyl alkanols wherein the molar carbon number average of said 2 -alkyl alkanols is 12 to 32; and optionally
b) (meth)acrylate esters of $C_{1-12}$ alkanols; wherein the molar carbon number average of the alkanols of the a) and b) (meth)acrylic acid esters is 12 to 32

It has indeed surprisingly been found that multilayer PSA films comprising a pressure sensitive adhesive layer with a pressure -sensitive adhesive composition of the before mentioned kind combine high peel forces on LSE substrates with high shear force resistance.

The multilayer PSA films of this invention are therefore particularly suitable to be bonded to low energy surfaces such as polyolefin surfaces and clear coat surfaces. The multilayer PSA films of the invention are preferably suitable to be bonded on clear coat surfaces of a vehicle, such as a car.

In another aspect, the present invention is directed to a method for manufacturing a multilayer pressure sensitive adhesive film as above-described, whereby the first pressure sensitive adhesive layer and the opposing layer a re superimposed on one another.

In still another aspect, the present invention relates to the use of a multilayer pressure sensitive adhesive film as above-described as a PSA film to be bonded with its first pressure sensitive adhesive layer to a LSE subs trate surface, preferably to a clear coat surface.

## Detailed description of the invention

According to the present invention, the pressure-sensitive adhesives for use in the multilayer PSA film are (meth)acrylate adhesives comprising at least one monomer derived from a 2-alkyl alkanol: i.e. a Guerbet alkanol. The pressure -sensitive adhesives may further comprise at least one (meth)acrylic acid ester of a $C_1$-$C_{12}$ alkanol, at least and one or more acid-functional monomers and optionally one or more non -acid functional polar monomers. The pressure -sensitive adhesives of the present invention optionally comprise other monomers which may be added to improve the physical properties of the adhesives, such as crosslinkers, and other additives such as tackifiers or p lasticizers.

The pressure-sensitive adhesive composition for use in the multilayer PSA film of the invention may either be used for the first pressure sensitive adhesive layer only or for the opposing layer and/ or further layers, like intermediate layers , as well.

The molar carbon number average of said 2-alkyl alkanols of the Guerbet (meth)acrylates is 12 to 32 ($C_{12}$-$C_{32}$), preferably 12 to 20 ($C_{12}$-$C_{20}$). When the optional b) $C_{1-12}$ alkanol (meth)acrylates are present, the carbon number molar average of th e alkanols of the a) and b) (meth)acrylic acid ester is 12 to 20 ($C_{12}$-$C_{20}$). The carbon number molar average may be calculated by summing the number of moles of each alkanol (Guerbet and $C_{1-12}$ alkanols) multiplied by the carbon number of each alkanol, and dividing the result by the total number of moles of alkanols:

$$\frac{\sum_{\alpha\text{-}\omega}[(\text{Moles of alkanol}) \times (\#\ \text{carbon atoms for alkanol})]}{\#\ \text{moles of alkanols}\ \alpha\ \text{to}\ \omega}$$

The (meth)acrylic acid ester monomer of 2 -alkyl alkanols are derived from $C_{12}$-$C_{32}$ Guerbet alkanols, preferably $C_{12}$-$C_{20}$ Guerbet alkanols. These Guerbet alkanols may be obtained by base-catalyzed self-condensation of linear and/or branched alkanols containing 4 to 14 and preferably 6 to 12 carbon atoms. Primary or secondary alkanols may be used in the preparation of Guerbet alkanols.

It is known in the art that Guerbet alkanols may be formed from the same or different alkanols i.e. a homo or hetero system. That is, a Guerbet alkanol is the condensation product of two alkanol molecules joined at the *beta* carbon of the alkanol which has retained the hydroxyl functionality; i.e. 2 -alkyl alkanols. The resultant product is therefore a branched primary alkanol containing a single hydroxyl group. It is possible to use mixtures of starting materials in the Guerbet reaction and condense them into mixtures of alkanol products. It is also possible to obtain products which are Guerbet alkanols from a short chained alkanol. It is desired for reasons of polarity, $T_g$ and modulus that Guerbet alkanols having a molar carbon number average between 12-32 be used. An overview of Guerbet alkanols was published by A. J. O'Lennick in Soap Cosm. Chem. Spec. (April) 52 (1987). Reference may also be made to U.S. 6,419,797 (Sherf et al.) for method to produce Guerbet alkanols.

The (meth)acrylate ester monomer derived fro m the Guerbet alkanols is of the formula I:

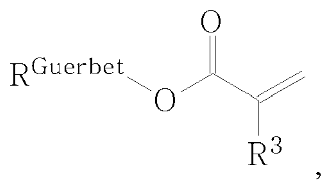

Formula I

wherein $R^{Guerbet}$ is derived from a $C_{12}$-$C_{32}$ 2-alkyl alkanol, i.e. an alkyl groups branched at the 2 position; and $R^3$ is H or $CH_3$.

Preferably, the (meth)acrylate ester monomer derived from the Guerbet alkanols is of the formula II:

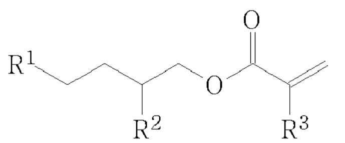

Formula II

wherein $R^1$ and $R^2$ are each independently $C_4$ to $C_{14}$ saturated, and branched or linear alkyl; and $R^3$ is H or $CH_3$.

The pressure-sensitive adhesive compositions for use in the multilayer PSA film of the invention may comprise Guerbet (meth)acrylate homopolymers, In many preferred embodiments, the adhesive copolymer comprises 5 1-99 parts by weight of Guerbet (meth)acrylates, relative to 100 parts total monomer.

Preferably, the Guerbet alkanol is derived from linear alkanols, i.e. $R^1$ and $R^2$ are linear alkyl groups. It has been surprisingly found that such (meth)acrylate esters of "linear Guerbet alkanols" provide a lower $T_g$ and storage modulus compared to monomers where $R^1$ and $R^2$ are branched. The $T_g$ of the resulting adhesive (co)polymers is $\leq$ -20°C, preferably $\leq$ -30°C, most preferably $\leq$ -40°C.

The pressure-sensitive adhesive copolymer for use in the multilayer PSA film of the invention may further comprise interpolymerized monomer units of $C_1$-$C_{12}$ (meth)acrylate ester monomers. Examples of monomers suitable for use as the $C_1$-$C_{12}$ (meth)acrylate ester monomer include the esters of either acrylic acid or methacrylic acid with non-tertiary alkanols such as ethanol, 1-propanol, 2-propanol, 1-butanol, 2-butanol, 1-pentanol, 2-pentanol, 3-pentanol, 2-methyl-1-butanol, 3-methyl-1-butanol, 1-hexanol, 2-hexanol, 2-methyl-1-pentanol, 3-methyl-1-pentanol, 2-ethyl-1-butanol, 3,5,5-trimethyl-1-hexanol, 3-heptanol, 1-octanol, 2-octanol, isooctylalcohol, 2-ethyl-1-hexanol, 1-decanol, 2-propylheptanol, 1-dodecanol, 1-tridecanol, 1-tetradecanol, citronellol, dihydrocitronellol, and the like. In some embodiments, the preferred (meth)acrylate ester monomer is the ester of (meth)acrylic acid with butyl alcohol or isooctyl alcohol, or a

combination thereof, although combinations of two or more different (meth)acrylate ester monomer are suitable.

Acrylic PSAs are typically derived from petroleum feedstocks. The increase in the price of oil, and concomitant petroleum -derived products, has led to volatile prices and supply for many adhesive products. It is therefore highly desirable to replace all or part of the petroleum-based feedstocks with those derived from renewable sources, such as plants, as such materials are relatively cheaper, and are therefore both economically and socially beneficial. Therefore, the need for such pl ant-derived materials has become increasingly significant.

In a preferred aspect, the present invention provides a composition of the opposing layer of the multilayer PSA film of the invention which is derived from renewable resources. In particular, the present invention provides a composition of the opposing layer derived, at least partly, from plant materials.

Hence, in a preferred execution, the present invention provides a composition of the opposing layer for the multilayer PSA film derived from renewable resources. In particular, the present invention provides an composition of the opposing layer derived, at least partly, from plant materials. This includes executions, in which not only one of the layers but several or all of the layers of the multilayer PSA film are derived from renewable resources. Many of the (meth)acrylate monomers used herein may be derived from renewable resources. In some embodiments, the preferred (meth)acrylate ester monomer is the ester of (meth)acrylic acid with an alkanol derived from a renewable source, such as 2-octanol, citronellol, dihydrocitronellol and Guerbet alkanols derived from renewable materials. It is especially preferred that the 2 -alkyl alkanol (meth)acrylate ester, in particular the Guerbet alkanol ester, an d/ or the 2-octyl(meth) acrylate is/ are completely derived from biological material.

In such a further preferred execution, the multilayer PSA film according to the invention is characterized in that that the polymerizable precursor of the polymer base material for forming the corresponding layers comprises 2-octyl (meth)acrylate, wherein the polymerizable precursor comprises preferably from 85 to 99.5 wt.-% 2-octyl(meth)acrylate, more preferably from 90 to 99.5 wt. -% (based on the total weight of the polymerizable mixture used to form the corresponding layers). According to a still more preferred execution of the multilayer PSA film of the invention, the polymerizable precursor of the polymer base material for forming the opposing layer, comprises 2 - octyl(meth)acrylate, wherein said polymerizable precursor preferably comprises from 85 to 99.5 wt%, more preferably from 90 to 99.5 wt% of 2 -octyl (meth)acrylate (based on the total weight of polymerizable mixture used to form the opposing layer).

Acrylic based compositions comprising 2-octyl(meth)acrylate are described in detail in US-B2-7,385,020 the content of which is herewith incorporated by reference.

The preferred composition of the opposing layer is derived from 2-octyl (meth)acrylate and provides comparable properties when compared with other isomers of octyl (meth)acrylate, such as n -octyl and isoctyl. Further, the present compositions of the opposing layer have lower viscosities than adhesives derived from other octyl isomers, such as isoctyl acrylate. The lower viscosity compositions advantageously are easier to coat.

The 2-octyl (meth)acrylate may be prepared by conventional techniques from 2 - octanol and (meth)acryloyl derivates such as esters, acids and acyl halides. The 2 -octanol may be prepared by treatment of ricinoleic acid, derived from castor oil, (or ester or acyl halide thereof) with sodium hydroxide, followed by distillation from the co -product sebacic acid.

However, the use of a chain transfer agent is generally not necessary. Applicants have discovered that the instant 2 -octyl (meth)acrylate compositions have generally lower inherent and solution viscosities when compared to isomeric octyl (meth)acrylates, at the same concentrations, and under the same polymerization conditions. While not wis hing to be bound by theory, it is believed that the instant octyl (meth)acrylates, having a tertiary hydrogen atom alpha to the ester hydroxyloxygen atom, serve as "internal" chain transfer agents to control the molecular weight.

It is further preferred th at the opposing layer is at least in part derived from biological material, in particular from a plant material, whereas especially at least 25 wt. - % of the monomers are derived from biological material, preferably at least 40 wt.-%. This is advantageous in order to provide multilayer PSA films which come at least partly from "green" sources, which is ecologically more sustainable and also reduces the dependency on mineral oil and its price development. Under the term "derived from biological material" it is meant that from a certain chemical ingredient, at least a part of its chemical structure comes from biological materials, in particular at least 50 wt. -% of its structure. This definition is in principle the same as for bio -diesel fuel, in which usually only the fatty acid part comes from biological sources whereas the methanol may also be derived from fossil material like coal or mineral oil.

In some embodiments it is desirable for the $C_1$-$C_{12}$ (meth)acrylate ester monomer to include a high $T_g$ monomer, have a $T_g$ of at least 25 °C, and preferably at least 50 °C. Examples of suitable monomers useful in the present invention include, but are not limited to, t-butyl acrylate, methyl methacrylate, ethyl methacrylate, isopropyl methacrylate, n-butyl methacrylate, isobutyl methacrylate, s-butyl methacrylate, t-butyl methacrylate, stearyl methacrylate, phenyl methacrylate, cyclohexyl methacrylate, isobornyl acrylate, isobornyl methacryl ate, benzyl methacrylate, 3,3,5 - trimethylcyclohexyl acrylate, cyclohexyl acrylate, N-octyl acrylamide, and propyl methacrylate or combinations.

It is highly preferred that the (co)polymer comprises isobornyl acrylate, isobornyl methacrylate and/ or N-vinylcaprolactam. The amounts of these comonomers are preferably selected in the range of 10 to 50 parts by weight, especially from 15 to 40 parts by weight. These comonomers exhibit especially good peel performance on LSE substrates

and shear resistance, even without the use of a tackifier or with relatively low amounts of tackifier.

If present, the $C_1$-$C_{12}$ (meth)acrylate ester monomer is present in an amount of 1 to 49 parts by weight, based on 100 parts total monomers. Most preferably $C_1$-$C_{12}$ (meth)acrylate ester monomer is present in an amount of 5 to 45 parts by weight based o n 100 parts total monomers. When high $T_g$ monomers are included, the copolymer may include up to 50 parts by weight, preferably up to 10 to 20 parts by weight relative to 100 parts by weight of $C_1$-$C_{12}$ (meth)acrylate ester monomer component.

The pressure-sensitive adhesive copolymer may further comprise an acid functional monomer, where the acid functional group may be an acid *per se,* such as a carboxylic acid, or a portion may be salt thereof, such as an alkali metal carboxylate. Useful acid functional monomers include, but are not limited to, those selected from ethylenically unsaturated carboxylic acids, ethylenically unsaturated sulfonic acids, ethylenically unsaturated phosphonic acids, and mixtures thereof. Examples of such compounds include those selected from acrylic acid, methacrylic acid, itaconic acid, fumaric acid, crotonic acid, citraconic acid, maleic acid, oleic acid, β-carboxyethyl (meth)acrylate, 2-sulfoethyl methacrylate, styrene sulfonic acid, 2 -acrylamido-2-methylpropanesulfonic acid, vinylphosphonic a cid, and mixtures thereof.

Due to their availability, acid functional monomers of the acid functional copolymer are generally selected from ethylenically unsaturated carboxylic acids, i.e. (meth)acrylic acids. When even stronger acids are desired, acidic monomers include the ethylenically unsaturated sulfonic acids and ethylenically unsaturated phosphonic acids. The acid functional monomer is generally used in amounts of 0 to 15, preferably 0.5 to 15, most preferably 0.5 to 5, parts by weight, based on 100 parts by weight total monomer.

The pressure-sensitive adhesive copolymer may further comprise polar monomers. The polar monomers useful in preparing the copolymer are both somewhat oil soluble and water soluble, resulting in a distribution of the polar mon omer between the aqueous and oil phases in an emulsion polymerization. As used herein the term "polar monomers" are exclusive of acid functional and ketone monomers. In particular useful is a monomer with an acidic group and a single ethylenically unsaturated group (i.e., an acidic monomer). These monomers are typically polar or strongly polar. Polarity (i. e., hydrogen-bonding ability) is frequently described by the use of terms such as 'strongly', 'moderately', and 'poorly'. References describing these an d other solubility terms include 'Solvents', Paint Testing Manual, 3rd ed., G.G. Seward, Ed., American Society for Testing and Materials, Philadelphia, Pennsylvania, and 'A Three -Dimensional Approach to Solubility', Journal of Paint Technology, Vol. 38, No. 496, pp. 269 - 280. For differentiation of polarity, some examples will be given. In particular useful representatives of strongly polar monomers are acrylic acid, methacrylic acid, itaconic acid, hydroxyalkyl acrylates, acryl amides and substituted acryl amides while, for example N-vinyl pyrrolidone, N-vinyl caprolactam, acrylonitrile, vinylchloride, diallyl phthalate and N,N-dialkylamino (meth)acrylates are typical examples of moderately polar monomers. Further examples for polar monomers include cyano ac rylate, fumaric acid, crotonic acid, citronic acid, maleic acid, β -carboxyethyl acrylate or sulfoethyl methacrylate. The alkyl (meth)acrylate monomers enumerated above are typical examples of rel atively poorly polar monomers. These examples are given for illustrative reasons only and are not to be understood as limiting.

The highly polar monomer may be present in amounts of 0 to 10 parts by weight, preferably 0.5 to 10 parts by weight, based on 100 parts by weight total monomer.

The pressure -sensitive adhesive copolymer of the multilayer PSA film according to the invention may further comprise other vinyl monomers. When used, vinyl monomers useful in the (meth)acrylate polymer include vinyl esters (e.g., vinyl acetate and vinyl propionate), styrene, substituted styrene (e.g., α-methyl styrene), vinyl halide, and mixtures thereof. As used herein vinyl monomers are exclusive of acid functional monomers, acrylate ester monomers and polar monomers. Such vinyl monomers are generally used at 0 to 5 parts by weight , preferably 1 to 5 parts by weight, based on 100 parts by weight total monomer.

There are two major crosslinking mechanisms for acrylic adhesives: free -radical copolymerization of multifunctional ethylenically unsaturated groups with the other monomers, and covalent or ionic crosslinking through the functional monomers, such as acrylic acid. Another method is the use of UV crosslinkers, such as copolymerizable benzophenones or post -added photocrosslinkers, such as multifunctional benzophenones and triazine s. In the past, a variety of different materials have been used as crosslinking agents, e.g., polyfunctional acrylates, acetophenones, benzophenones, and triazines. Crosslinking may also be achieved using high energy electromagnetic radiation such as gamma or e-beam radiation. In this case, no additional crosslinker may be required.

In order to increase cohesive strength of the coated adhesive composition, a multifunctional (meth)acrylate may be incorporated into the blend of polymerizable monomers. Multifunctional acrylates are particularly useful for emulsion or syrup polymerization. Examples of useful multifunctional (meth)acrylate include, but are not limited to, di (meth)acrylates, tri(meth)acrylates, and tetra(meth)acrylates, such as 1,6 - hexanediol di(meth)acrylate, poly(ethylene glycol) di(meth)acrylates, polybutadiene di(meth)acrylate, polyurethane di(meth)acrylates, and propoxylated glycerin tri (meth)acrylate, and mixtures thereof. The amount and identity of multifunctional (meth)acrylate is tailored depending upon application of the adhesive composition. Typically, the multifunctional (meth)acrylate is present in amounts less than 5 parts based on total dry weight of adhesive composition. More specifically, the crosslinker may be present in amounts from 0.01 to 5 parts, preferably from 0.05 to 1 parts, based on 100 parts total monomers of the adhesive

composition.

In some embodiments, the copolymer of the inventive PSA film may comprise:

a) up to 100, preferably from 51 to 99, more preferably from 55 to 95 parts by weight of an (meth)acrylic acid ester monomer of 2 -alkyl alkanols, with a molar carbon number average of from 12 to 32;
b) 0 to 49, preferably from 1 to 45, more preferably from 5 to 45, parts by weight of an (meth)acrylic acid ester of a $C_1$-$C_{12}$ alkanol;
c) 0 to 15, preferably from 0.1 to 10, most preferably from 0.5 to 5, parts by weight of an acid functional ethylenically unsaturated monomer;
d) 0 to 10, preferably from 0.5 to 10, parts by weight of a non -acid functional, ethylenically unsaturated polar monomer;
e) 0 to 5, preferably from 1 to 5 parts by weight, of a vinyl monomer; and
f) 0 to 5, preferably from 0.01 to 5, most preferably from 0.05 to 1 parts of a multifunctional (meth)acrylate;
based on 100 parts by weight total monomer.

The adhesive (co)polymers herein may be prepared by any conventional free radical polymerization method, including solution, radiation, bulk, dispersion, emulsion, and suspension processes. For optical applications, solution, UV and bulk processes are preferred. Other processes may introduce birefringence or foreign materials that may affect optic properties. The resulting adhesive (co)polymers may be random or block (co)polymers.

The adhesive copolymers may be prepared via suspension polymerizations as disclosed in U.S. 3,691,140 (Silver); 4,166,152 (Baker et al.); 4,636,432 (Shibano et al); 4,656,218 (Kino shita); and 5,045,569 (Delgado).

Water-soluble and oil-soluble initiators useful in preparing the (meth)acrylate adhesive copolymers used in the present invention are initiators that, on exposure to heat, generate free-radicals which initiate (co)polymerization of the monomer mixture. Water-soluble initiators are preferred for preparing the (meth)acrylate polymers by emulsion polymerization. Suitable water-soluble initiators include but are not limited to those selected from the group consisting of potassium persulfate, ammonium persulfate, sodium persulfate, and mixtures thereof; oxidation -reduction initiators such as the reaction product of the above -mentioned persulfates and reducing agents such as those selected from the group consisting of sodium metabisulfite and sodium bisulfite; and 4,4'-azobis(4-cyanopentanoic acid) and its soluble salts (e.g., sodium, potassium). The preferred water-soluble initiator is potassium persulfate. Suitable oil -soluble initiators include but are not limited to those selected from the group consisting of azo compounds such as VAZO™ 64 (2,2'-azobis(isobutyronitrile)) and VAZO™ 52 (2,2'-azobis(2,4-dimethylpentanenitrile)), both available from E.I. du Pont de Nemours Co., peroxides such as benzoyl peroxide and lauroyl peroxide, and mixtures thereof. The preferred oil-soluble thermal initiator is (2,2'-azobis(isobutyronitrile)). When used, initiators may comprise from about 0.05 to about 1 part by weight, preferably about 0.1 to about 0.5 part by weight based on 100 parts by weight of monomer components in the pressure - sensitive adhesive.

Polymerization via emulsion techniques may require the presence of an emulsifier (which may also be called an emulsifying agent or a surfactant). Useful emulsifiers for the present invention include those selected from the group consisting of anionic surfactants, cationic surfactants, nonionic surfactants, and mixtures thereof.

Preferably, the emulsion polymerization is carried out in the presence of anionic surfactant(s). A useful range of surfactant concentration is from about 0.5 to about 8 weight percent, preferably from about 1 to about 5 weight percent, based on the total weight of all monome rs of the emulsion pressure -sensitive adhesive.

Alternatively, the copolymers can be polymerized by techniques including, but not limited to, the conventional techniques of solvent polymerization, dispersion polymerization, and solventless bulk polymeriza tion. The monomer mixture may comprise a polymerization initiator, especially a thermal initiator or a photoinitiator of a type and in an amount effective to polymerize the comonomers , as previously described.

The copolymerizable mixture may optionally fur ther comprise chain transfer agents to control the molecular weight of the resultant polymer. Examples of useful chain transfer agents include but are not limited to those selected from the group consisting of carbon tetrabromide, alcohols, mercaptans, and mixtures thereof. When present, the preferred chain transfer agents are isooctylthioglycolate and carbon tetrabromide. The polymerizable mixture may further comprise up to about 0.5 parts by weight of a chain transfer agent, typically about 0.01 to about 0.5 parts by weight, if used, preferably about 0.05 parts by weight to about 0.2 parts by weight, based upon 100 parts by weight of the total monomer mixture.

A typical solution polymerization method is carried out by adding the monomers, a suitable solvent, and an optional chain transfer agent to a reaction vessel, adding a free radical initiator, purging with nitrogen, and maintaining the reaction vessel at an elevated temperature, typically in the range of about 40 to 100 °C until the reaction is complete d, typically in about 1 to 20 hours, depending upon the batch size and temperature. Examples of the solvent are methanol, tetrahydrofuran, ethanol, isopropanol, acetone, methyl ethyl ketone, methyl acetate, ethyl acetate, toluene, xylene, and an ethylene glycol alkyl ether. Those solvents can be used alone or as mixtures thereof.

In a typical photopolymerization method, a monomer mixture may be irradiated with ultraviolet (UV) rays in the

presence of a photopolymerization initiator (i.e., photoinitiators). Preferred photoinitiators are those available under the trade designations IRGACURE™ and DAROCUR™ from Ciba Speciality Chemical Corp., Tarrytown, NY and include 1-hydroxy cyclohexyl phenyl ketone (IRGACURE™ 184), 2,2-dimethoxy-1,2-diphenylethan-1-one (IRGACURE 651), *bis*(2,4,6-trimethylbenzoyl) phenylphosphineoxide (IRGACURE™ 819), 1-[4-(2-hydroxyethoxy)phenyl] -2-hydroxy-2-methyl-1-propane-1-one (IRGACURE™ 2959), 2-benzyl-2-dimethylamino-1-(4-morpholinophenyl)butanone (IRGACURE™ 369), 2-methyl-1-[4-(methylthio)phenyl]-2-morpholinopropan-1-one (IRGACURE™ 907), and 2-hydroxy-2-methyl-1-phenyl propan-1-one (DAROCUR™ 1173). Particularly preferred photoinitiators are IRGACURE™ 819, 651, 184 and 2959.

Solventless polymerization methods, such as the continuous free radical polymerization method described in U.S. Pat. Nos. 4,619,979 and 4,843,134 (Kotnour et al.); the essentially adiabatic polymerization methods using a batch reactor described in U.S. Pat. No. 5,637,646 (Ellis); and, the methods described for polymer izing packaged pre-adhesive compositions described in U.S. Pat. No. 5,804,610 (Hamer et al.) may also be utilized to prepare the polymers.

The pressure -sensitive adhesive composition for use in the multilayer PSA film according to the invention may also contain one or more conventional additives. Preferred additives include tackifiers, plasticizers, dyes, antioxidants, and UV stabilizers. Such additives can be used if they do not affect the superior properties of the emulsion pressure-sensitive adhesives.

Conventional acrylic adhesives do not adhere well to certain substrates, such as certain types of automotive paints and low energy olefinic surfaces. Efforts have been made to improve the adhesion of acrylic adhesives, i.e., develop more aggressive tack, to these types of surfaces; tackifying the base acrylic polymer is commonly practiced. Various types of tackifiers include phenol modified terpenes, hydrocarbon resins such as polyvinyl cyclohexane and poly(t -butyl styrene), and rosin esters such as glycero 1 esters of rosin and pentaerythritol esters of rosin.

Various types of tackifiers include phenol modified terpenes and rosin esters such as glycerol esters of rosin and pentaerythritol esters of rosin that are available under the trade names Nuroz™, Nutac™ (Newport Industries), Permalyn™, Staybelite™, Foral™ (Eastman). Also available are hydrocarbon resin tackifiers that typically come from C5 and C9 monomers by products of naphtha cracking and are available under the trade names Piccotac™, Eastotac™, Rega lrez™, Regalite™ (Eastman), Arkon™ (Arakawa), Norsolene™, Wintack™ (Cray Valley), Nevtack, LX (Neville Chemical Co.), Hikotack™, Hikorez™ (Kolon Chemical), Novares™ (Rutgers N.V.), Quintone™ (Zeon), Escorez™ (Exxonmobile Chemical), Nures™, and H-Rez™ (Newport Industries).

Due to the high solubility parameter of most conventional pressure -sensitive acrylic adhesives and the presence of specific potential interactions between these adhesives and many tackifiers, a limited selection of tackifiers is available to the formulator. As a class, hydrocarbon -based tackifiers, and especially hydrogenated hydrocarbon resins, are typically unsuitable for use in polar acrylic adhesives formulations due to their nonpolar character.

Rosin acid based tackifiers and selected phenol-modified terpene and alphapinene based resins perform well in a variety of conventional acrylic pressure-sensitive adhesives. However, some problems are still associated with the use of this limited range of tackifiers in such acrylic adhesives. Tackified acrylic pressure -sensitive adhesive formulations are often discolored or yellow. The yellow appearance of these tackified acrylic pressure -sensitive adhesives is a direct result of the distinct yellow tinge inherent in many of these tackifiers. Upon aging and exposure to light, this discoloration can become even more pronounced, even with lighter colored grades of resin. Acrylic adhesives without tackifiers typically have excellent aging properties.

Conventional tackified acrylic pressure-sensitive adhesives can also appear cloudy, demonstrating a loss in the characteristic transparency found in many conventional acrylate press ure-sensitive adhesive compositions. The cloudiness is an indication of limited or incomplete compatibility of the tackifier and the acrylic polymers. The reduced compatibility can lead to a degradation of adhesive properties on aging, as evidenced by a loss of tack or reduced peel adhesion. In some cases, the addition of a tackifier to an adhesive composition having acrylic monomers, polymers, oligomers, and any mixture thereof, can be clear and appear to be compatible. However, after removing the solvent, curing the adhesive, or on aging, the adhesive can become cloudy, indicating some incompatibility between the tackifier an d acrylic base polymer.

In addition to these losses in clarity and stability of tackified acrylic adhesives, other deleterious effects can be observed when tackifiers are present during bulk acrylic polymerization reactions. Depending on the structure of the tackifier, undesirable effects of adding a tackifier include the inhibition or retardation of the polymerization reaction and/or the alteration of the final polymer structure if the tackifier acts as a chain-transfer or chain-terminating agent. Such effects can adversely influence the performance and stability of acrylates polymerized in the presence of these tackifiers. Chain termination can also result in undesirably high residual volatile materials.

In many embodiments, the present disclosure provides tackified PSA compositions for use in the multilayer PSA film according to the invention that overcome problems noted in the art. The tackifier is preferably selected from a material that is essentially free of any ethylenically or acetylenically unsaturated bonds. The tackifier includes, but is not limited to, hydrogenated rosin resins, hydrogenated and esterified rosin resins, hydrogenated terpene resins, aliphatic petroleum resins, aromatic petroleum resins, alicyclic petroleum resins obtained by hydrog enating aromatic petroleum

resins, and the like. Preferably, the tackifier used is selected from hydrogenated $C_9$ petroleum resins such as but not limited to Regalrez™ tackifiers (Eastman) or Arkon™ (Arakawa) tackifiers. Such "hydrophobic tackifiers", may be used in amounts of up to 50 parts, up to 45 parts, up to 40 parts, up to 35 parts, or up to 30 parts. The amount of tackifier can be for example, in the range of 3 to 50 parts, in the range of 3.5 to 45 parts, in the range of 4 to 40 parts, in the range of 4.5 to 35 parts, or in the range of 5 to 30 parts, relative to 100 parts of said (meth)acrylate ester (co)polymer .

As far as the built-up of the multilayer PSA film according to the invention is concerned, the multilayer PSA film comprises at least the first pressure sensitive adhesive layer and an opposing layer. The opposing layer can be a non -tacky backing layer or may have pressure sensitive adhesive characteristics as well. In the latter embodiment, the opposing layer is a second pressure sensitive adhesive layer.

The present invention is however not limited to two layered films. For example, the multilayer PSA film according to the invention may comprise also three, four, five or even more superimposed layers. In such an execution, it is further preferred that the outermost layers are the first and second pressure sensitive adhesive layers. The layers sandwiched in between are referred to as intermediate layer(s). In other words, in such an execution the multilayer film comprises at least one intermediate layer between the first pressure sensitive adhesive layer and the second pressure sensitive adhesive layer.

The composition of the second pressure sensitive adhesive layer can be chosen from any known PSA system. In particular, the opposing layer and/ or the intermediate layer comprise a polymer chosen from the group consisting of polyacrylates, polyurethanes, polyolefins, polystyrene, natural rubbers, synthetic rubbers, polyvinylpyrrolidone , and any combinations or mixtures thereof.

However it is also possible that the opposing layer and/ or the intermediate layer(s) is chosen from a pressure sensitive adhesive composition as described in this invention for the first PSA layer. The formulation of the second pressure sensitive adhesive layer can be both identical or different compared to the first pressure sensitive adhesive layer.

Besides those materials listed above, the opposing and/or intermediate layer may comprise or consist of a backing film. Suitable backing films can be made from plastics (e.g., polypropylene, including biaxially oriented polypropylene, vinyl, polyethylene, polyester such as polyethylene terephthalate), nonwovens (e.g., papers, cloths, nonwoven scrims), metal foils, foams (e.g., polyacrylic, polyethylene, polyurethane, neoprene), and the like. Foams are commercially available from various suppliers such as 3M Co., Voltek, Sekisui, and others. The foam may be formed as a coextruded sheet with the pressure-sensitive adhesive composition on one or both sides of the foam, or the pressure-sensitive adhesive composition may be laminated to it. When the adhesive is laminated to the substrate, it may be desirable to treat the surface of the substrate to improve the adhesion. Such treatments are typically selected based on the nature of the materials of the adhesive and of the substrate and include primers and surface modifications (e.g., corona treatment, surface abrasion).

For a single-sided multilayer PSA film, the side of the opposing layer surface opposite of the first pressure sensitive adhesive layer is typically coated with a suitable release material. Release materials are known and include materials such as, for example, silicones, polyethyleness, polycarbamates, polyacrylics, and the like.

In another execution of the multilayer PSA film of the invention, the first pressure sensitive adhesive layer, the opposing layer and/ or the intermediate layer may optionally comprise at least one filler material which is preferably selected from the group consisting of filler particles, microspheres, expendable microspheres, preferably pentane filled expendable microspheres or gaseous cavities, glassbeads, glass microspheres, hydrophobic silica type fillers, hydrophilic silica type fillers, fibers, electrically and/or thermally conducting particles, nano particles, and any combinations thereof; and wherein the intermediate layer preferably comprises an aluminium silicate, more preferably expanded perlite. Such fillers may be used to increase the mechanical stability of the PSA film and may also increase the shear and peel force resistance.

From the filler particles set out above, expanded perlite is especially preferred. Perlite is a naturally occurring hydrated volcanic glass formed by the alteration of obsidian. Typically, perlite is composed of silicon dioxide (70 - 75 wt. %), aluminium oxide (12 - 17 wt.%), sodium oxide (3 - 4 wt.%), potassium oxide (3 - 5 wt.%), iron oxide (0.5 - 2 wt.%), magnesium oxide (0.2 - 0.7 wt.%) and calcium oxide (0.5 - 1.5 wt.%). Natural perlite further contai ns about 3 - 5 wt.% water.

The perlite used for the present invention is expanded in order to obtain very low density bubbles in the material, which is accomplished because of the presence of water in the crude perlite rock. Upon accelerated heating to ab ove 870°C, the crude perlite rock pops in a manner similar to popcorn as the glass ore particles soften in the flame and the water in the ore turns to steam and expends forming the numerous low density bubbles previously mentioned. This process for expanding perlite is known.

In the present invention, expanded perlite is used in particulate form, whereas the expanded perlite particles have in particular an average diameter from 1 - 300 $\mu$m, in particular from 10 - 150 $\mu$m. Expanded perlite particles of that size are available on the market and can be produced by crushing the expanded perlite obtained by the heat treatment of perlite rock as set out above.

The amounts of expanded perlite which may be added to any of the layers of the multilayer pressure sensitive adhesive film of the invention may vary in broad ranges. It is especially preferred to add the expanded perlite to the

opposing layer and/ or the intermediate layer, especially if these layers do not have PSA characteristics. In particular, the expanded perlite content may range from 1 - 30 wt.% with reference to the composition of the backing layer, in particular from 2 - 20 wt.%. However, the present invention is not limited to the before mentioned ranges. The multilayer PSA-films with such contents in the backing layer reveal especially high peel adhesion forces, particularly on clear coat surfaces.

As set out above, expanded perlite is a porous material. The porosity ensures that the addition of such a filler material does not increase the overall weight of the PSA-film but even in the contrary may reduce the overall weight. Hence, it is preferred that the expanded perlite being used has a compacted density of 680 to 850 mL/100g

In this context, it is further preferred that the expanded perlite particles exhibit a surface modification, which is preferably chosen from hydrophobic surface modifications, like a silane surface modification and/ or a hydrophilic modification like an epoxydation, amination or an acrylate functionalization. Without wishing to be bound by theory, it is believed that the hydrophobic modifications may further enhance the adhesion to glass surfaces for example and may also lead to weaker interactions between the polymeric matrix and the filler and therefore to an improved deformability of the adhesive. Still without wishing to be bound by theory, it is believed that this effect leads to a better stress distribution in the adhesive layer resulting in improved peel performance especially on critical to adhere surfaces. The hydrophilic modifications may serve to improve adhesion to the polymer matrix of the layer in which the filler is incorporated. The epoxydation, amination and acrylate functionalization can be achieved by a reaction with aminosilane, epoxysilane and acrylic silanes for example.

Other additives may be included in the first pressure sensitive adhesive layer, the opposing layer and/ or the intermediate layer to change their respective properties. Such additives, include pigments, tackifiers, toughening agents, reinforcing agents, fire retardants, antioxidants, and stabilizers. The additives are added in amounts sufficient to obtain the desired end properties.

According to another preferred execution of this invention, the multilayer PSA film is provided on at least one of its major surfaces with a release liner. As release liner, any suitable material known to the skilled person can be used like a siliconized paper or siliconized polymeric film material, in particular a siliconized PET -film.

The thickness of the pressure sensitive adhesive lay er(s), the opposing layer and the intermediate layer may vary in wide ranges. For example, the thickness can be chosen independently for each layer between 25 μm and 3,000 μm, more preferably between 75 μm and 2,000 μm and especial ly preferably between 75 μm and 1,500 μm. It is however preferred that the pressure sensitive adhesive layer(s) exhibits a lower thickness compared to the intermediate and/ or opposing layer. As an example, the thickness of the PSA layer may be in the rang e from 20 to 200 μm whereas the opposing layer accounts to 800 to 2000 μm in thickness. Such multilayer PSA films exhibit high peel adhesion, probably caused by a stabilizing effect of the relatively thick opposing layer compared to the PSA layer.

The present invention is further directed to a method for manufacturing a multilayer pressure sensitive adhesive film according to this invention, in which the first pressure sensitive adhesive layer and the opposing layer are superimposed on one another.

According to one preferred execution of this method, the first pressure sensitive adhesive layer and the opposing layer and - if desired also the intermediate layer(s) - are prepared separately and afterwards laminated to each other.

In an alternative method for manufacturing a multilayer pressure sensitive adhesive film according to this invention, a liquid precursor of a first pressure sensitive adhesive layer and a liquid precursor of the opposing layer and - if desired also the intermediate layer(s) - are superimposed and then cured, preferably with actinic radiation such as UV, γ (gamma) or e -beam radiation or by thermal curing. This method is in detail described in WO 2011094385(A1), the content of which is herewith incorporated by reference.

However, the production of the inventive multilayer film is not limited to the before mentioned methods. For instance, the multilayer PSA -film may be produced by co-extrusion, solvent-based methods or also combinations thereof.

The present invention is further directed to the use of a multilayer pressure sensitive adhesive film according to this invention as a PSA film to be bonded with its first pressure sensitive adhesive layer to a LSE substrate surface, preferably to a clear coat surface.

As set out above, the multi layer PSA film according to this invention is particularly useful for forming strong adhesive bonds to lows urface energy (LSE) substrates. As used herein, low surface energy substrates are those having a surface energy of less than about 45 dynes per cent imeter, more typically less than about 40 dynes per centimeter, and most typically less than about 35 dynes per centimeter. Included among such materials are polypropylene, polyethylene (e.g., high density polyethylene or HDPE), polystyrene, poly(methyl methacrylate) (PMMA) and many clear coat surfaces especially those used in the automotive industry . Other substrates may also have properties of low surface energy due to a residue, such as an oil residue or a film such as a paint, being on the surface of th e substrate. However, even though the present adhesive bonds well to low surface energy surfaces, the invention is not limited to being bonded to low surface energy substrates, as it has been found that the inventive adhesive can also bond well to higher surface energy substrates such as, for example, other plastics, ceramics (e.g., glass), metals.

Item 1 is a multilayer pressure sensitive adhesive (PSA) film, having a first pressure sensitive adhesive layer

and at least one opposing layer, wherein the first pressure sensitive adhesive layer comprises a pressure-sensitive adhesive composition comprising (co)polymers of :

a) (meth)acrylate ester of 2 -alkyl alkanols wherein the molar carbon number average of said 2 -alkyl alkanols is 12 to 32; and optionally
b) (meth)acrylate esters of $C_{1-12}$ alkanols; wherein the molar carbon number average of the alkanols of the a) and b) (meth)acrylic acid esters is 12 to 32

Item 2 is the multilayer PSA film of item 1, wherein the molar carbon number average of the alkanols of the a) and b) (meth)acrylic acid esters is 12 to 20.
Item 3 is the multilayer PSA film of item 1 or 2, wherein the pressure sensitive adhesive composition further comprises acid monomer units and/ or non -acid polar monomer units.
Item 4 is the multilayer PSA film according to any of the preceding items, wherein the (co)polymers comprise b) (meth)acrylate esters of $C_{1-12}$ alkanols.
Item 5 is the multilayer PSA film according to any of the preceding items, wherein the 2-alkyl alkanols are derived from linear alkanols.
Item 6 is the multilayer PSA film according to any of the preceding items, wherein the 2-alkyl alkanol (meth)acrylate ester is of formula:

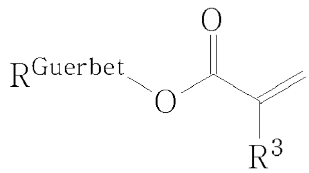
,

wherein $R^{Guerbet}$ is derived from a $C_{12}$-$C_{32}$ 2-alkyl alkanol, an d $R^3$ is H or $CH_3$.
Item 7 is the multilayer PSA film according to item 6, wherein the 2-alkyl alkanol (meth)acrylate ester is of formula:

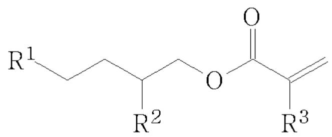
,

wherein $R^1$ and $R^2$ are each independently $C_4$ to $C_{14}$ saturated, and branched or line ar alkyl; and $R^3$ is H or $CH_3$.
Item 8 is the multilayer PSA film according to any of the preceding items, wherein the (co)polymers comprise :

a) 51 to 99 parts by weight of an (meth)acrylic acid ester monomer of 2 -alkyl alkanols;
b) 1 to 49 parts by weight of an (meth)acrylic acid ester of a $C_1$-$C_{12}$ alkanol;
c) 0 to 15 parts by weight of an acid functional ethylenically unsaturated monomer;
d) 0 to 10 parts by weight of a non -acid functional, ethylenically unsaturated polar monomer;
e) 0 to 5 parts by weight of a vinyl monomer; and
f) 0 to 5 parts by weight of a multifunctional (meth)acrylate; based on 100 parts by weight total monomer.

Item 9 is the multilayer PSA film according to item 8, wherein the (co)polymers comprise from 5 to 45 parts by weight of a (meth)acrylic acid ester of a $C_1$-$C_{12}$ alkanol.
Item 10 is the multilayer PSA film according to item 8 or 9, wherein the (co)polymers comprise from 0.1 to 10 parts by weight of an acid functional ethylenically unsaturated monomer.
Item 11 is the multilayer PSA film according to any of items 8 to 10, wherein the (co)polymers comprise from 0.5 to 10 parts by weight of a non -acid functional, ethylenically unsaturated polar monomer.
Item 12 is the multilayer PSA film according to any of items 8 to 11, wherein the (co)polymers comprise from 0.05 to 1 parts of a multifunctional (meth)acrylate.
Item 13 is the multilayer PSA film according to any of the preceding items, wherein the (co)polymer comprises a strongly polar acrylate, which is preferably selected from the group consisting of acrylic acid, methacrylic acid, itaconic acid, hydroxyalkyl acrylates, acrylamides, substituted acrylamides, and any combinations or mixtures thereof.

Item 14 is the multilayer PSA film according to item 13, wherein the (co)polymer comprises up to 10 weight percent of the strongly polar acrylate , based on 100 parts by weight total monomer, preferably from 0.5 to 10 parts by weight.

Item 15 is the multilayer PSA film according to any of the preceding items, wherein the (co)polymer comprise s isobornyl acrylate, isobornyl methacryl ate and/ or N-vinylcaprolactam.

Item 16 is the multilayer PSA film according to any of the preceding items, wherein the first pressure sensitive adhesive layer comprises a tackifier, preferably from 3 to 50 parts tackifier relative to 100 parts of said (meth)acrylate ester (co)polymer , more preferably from 5 to 30 parts tackifier relative to 100 parts of said (meth)acrylate ester (co) polymer.

Item 17 is the multilayer PSA film according to item 16, wherein the tackifier is selected from the group consisting of hydrogenated rosin resins, hydrogenated and esterified rosin resins, hydrogenated terpene resins, aliphatic petroleum resins, aromatic petroleum resins, alicyclic petroleum resins , and any combinations or m ixtures thereof.

Item 18 is the multilayer PSA film according to any of the preceding items, wherein the pressure-sensitive adhesive of the first pressure sensitive adhesive layer, the opposing layer and/ or the intermediate layer has a $T_g$ of $\leq$ -20°C.

Item 19 is the multilayer PSA film according to any of the preceding items, wherein the (co)polymer comprises a crosslinking agent.

Item 20 is the multilayer PSA film according to any of the preceding items, wherein the opposing layer is a second pressure sen sitive adhesive layer.

Item 21 is the multilayer PSA film according to item 20, wherein the multilayer film comprises at least one intermediate layer between the first pressure sensitive adhesive layer and the second pressure sensitive adhesive layer.

Item 22 is the multilayer PSA film according to any of the preceding items, wherein the opposing layer and/ or the intermediate layer comprise a polymer base material chosen from the group consisting of polyacrylates, polyurethanes, polyolefins, polystyrene, natural rubbers, synthetic rubbers, polyvinylpyrrolidone and any combinations or mixtures thereof.

Item 23 is the multilayer PSA film according to any of the preceding items, wherein the polymerizable precursor of the polymer base material for forming the opposing layer, comprises 2 -octyl(meth)acrylate, wherein the polymerizable precursor preferably comprises from 85 to 99.5 wt%, more preferably from 90 to 99.5 wt% of 2 - octyl(meth)acrylate (based on the total weight weight of the polymerizable base materia 1 used to form the opposing layer).

Item 24 is the multilayer PSA film according to any of the preceding items, wherein the pressure-sensitive adhesive composition and/or the polymerizable precursor of the polymer base material for forming the opposing lay er and/ or the intermediate layer is at least partly derived from biological material, preferably from a plant material, wherein at least 25 wt. -%, preferably at least 40 wt. -% of the pressure-sensitive adhesive composition and/or the polymerizable precursor of the polymer base material for forming the opposing layer and/ or the intermediate layer are preferably derived from biological material.

Item 25 is the multilayer PSA film according to any of items 23 or 24, wherein the 2-octyl(meth)acrylate is integrally derived from biological material.

Item 26 is the multilayer PSA film according to any of the preceding items, wherein the first pressure sensitive adhesive layer, the opposing layer and/ or the intermediate layer comprise at least one filler material which is preferably selected from the group consisting of filler particles, microspheres, expendable microspheres, preferably pentane filled expendable microspheres or gaseous cavities, glassbeads, glass microspheres, hydrophobic silica type fillers, hydrophilic silica type fillers, fibers, electrically and/or thermally conducting particles, nano particles , and any combinations or mixtures thereof; and wherein the intermediate layer preferably comprises an aluminium silicate, more preferably expanded perlite.

Item 27 is the multilayer PSA film according to item 26, wherein the expanded perlite expanded perlite particles exhibit a surface modification, which is more preferably chosen from hydrophobic surface modifications and/or a hydrophilic modification. Preferred hydrophobic surface modifications include silane surface modification. Preferred hydrophilic surface modifications include epoxydation, amination and/or an acrylate functionalization.

Item 28 is the multilayer PSA film according to any of th e preceding items, wherein the PSA film is provided on at least one of its major surfaces with a release liner.

Item 29 is a method for manufacturing a multilayer pressure sensitive adhesive film according to any of items 1 to 28, whereby the first pressure sensitive adhesive layer and the opposing layer are superimposed on one another.

Item 30 is the method according to item 29, wherein the first pressure sensitive adhesive layer and the opposing layer are prepared separately and subsequently laminated to each other.

Item 31 is the method according to item 29, wherein a liquid precursor of the first pressure sensitive adhesive layer and a liquid precursor of the opposing layer are superimposed and then cured, preferably with actinic radiation or by therm al curing. Preferred actinic radiations include UV, $\gamma$ (gamma) and e-beam radiation.

Item 32 is the use of a multilayer pressure sensitive adhesive film according to any of items 1 to 28 as a PSA film to be bonded with its first pressure sensitive adhesive layer to a LSE substrate surface, preferably to a clear coat

surface.

The present invention is explained in more detail with the following examples.

**Test methods applied:**

90°-Peel-test at 300 mm/min (according to Test Method, Finat No. 2)

Multilayer pressure sensitive adhesive film strips according to the present invention and having a width of 10mm and a length > 175mm are cut out in the machine direction from the sample material.

For test sample preparation the liner is first removed from the one adhesive side and placed on an aluminium strip having the following dimension 22 X 1.6 cm. Then the adhesive coated side of each multilayer PSA film strip is placed, after the liner is removed ,with its adhesive side down on a clean test panel using light finger pressure. Next the test samples are rolled twice in each direction with a standard FINAT test roller (weight 6,8 kg) at a speed of approximately 10 mm per second to obtain intimate contact between the adhesive mass and the surface. After applying the pressure sensitive adhesive film strips to the test panel, the test samples are allowed to dwell either 20 minutes or 72 hours at ambient room temperature (23°C +/- 2°C, 50% relative humidity +/-5%) prior to testing.

For peel testing the test samples are in a first step clamped in the lower movable jaw of a Zwick tensile tester (Model Z020 commercially available from Zwick/Roell GmbH, Ulm, Germany). The multilayer pressure sensitive adhesive film strips are folded back at an angle of 90° and their free ends grasped in the upper jaw of the te nsile tester in a configuration commonly utilized for 90° measurements. The tensile tester is set at 300 mm per minute jaw separation rate. Test results are expressed in Newton per 10 mm (N/10 mm). The quoted peel values are the average of two 90° -peel measurements.

Static shear test @ 70 °C with 500 g hanging weights (according to Test Method, Finat No.8):

The static shear is a measure of the cohesiveness or internal strength of an adhesive. It is measured in units of time (minutes) required to pull a standard area of adhesive sheet material from a stainless steel test panel under stress of a constant, standard load.

A multilayer PSA film strip of 10 mm width and 20 mm length is cut out in machine direction from the sample. One of the attached surface liners is then removed and the specimen placed with the desired foam side on an aluminium bac king. Then the second release liner is removed and the foam is attached to the test substrate (plate), providing a bond area of 20 x 10 mm and using light finger pressure. The standard FINAT test roller (weight 6.8 kg) is rolled twice in each direction at a speed of approximately 10 mm per second to obtain intimate contact between the adhesive mass and the substrate surface (test plate). After applying the foam strip (specimen) to the test plate, the test plate is allowed a dwell time at room temperature (23°C +/ -2°C, 50% relative humidity +/-5%) for a period of 24h before testing.

The test panel is placed in a shear holding device. After a 10 min ute dwell time at the test temperature of 70°C for Uregloss and 90 °C for VW -2K, the 500g load is hung into the hole on the test panel. The timer is started. The results are recorded in minutes until failure and are the average of two shear measurements. A recorded time of "10000+" indi cates that the tape does not fail after 10000 min, when the test is stopped.

**Test samples:**

The adhesive tests are carried out on the following automotive clear coat panels:

**UreGloss** clear coat coated panels available from BASF Coatings
**CeramiClear5** coated panels available from PPG Industries
**VW 2K** clear coat coated panels available from BASF coa tings

The upper listed clear coats include acrylic resins and polyesters used alone or with mixtures of copolymers comprising hydroxy - or glycidyl-functionalities or carbamatic acid residues (groups); or copolymers of acrylic acid and methacrylic acid esters with hydroxyl groups, free acid groups and further comonomers (e.g. st yrene). Panels are cut prior to 90 °peel and shear testing to the requested dimension.

Before testing, the Automotive clear coat coated panels are cleaned either with a 1:1 mixture of isopropylalcohol and distilled water in the case of Uregloss and VW 2K clear coats or with n -heptane for the CeramiClear 5 clear coat. Test panels are then rubbed dry with a paper ti ssue.

**Raw materials used:**

In the examples, the following raw materials are used:

**Isooctylacrylate** is an ester of isooctylalcohol and acrylic acid which is obtained from 3M Hilden, Germany (IOA).

**HEDA 16** (branched C16 acrylate) is an ester from C16 guerbet alcohol and acrylic acid, it is commercially available by Toho Chemical Industry, Japan).

**NK Ester ISA** (isostearyl acrylate, branched C18 acrylate) is an ester from C18 guerbet alcohol and acrylic acid, it is commercially available Shin Nakamura Chemical, Japan

**Acrylic acid** is obtained from 3M Hilden, Germany (AA).

**Isobornylacrylate (SR 506D)** is a monofunctional acrylic monomer with a high Tg of 66°C, it is available from Cray Valley, France.

**N- Vinylcaprolactam** is a monofunctional acrylic monomer with an amide -group in the side-chain, it is available from BASF AG, Germany.

**Regalite R-1125** is a low molecular weight, fully hydrogenated hydrocarbon resin, commercially available from Eastman Chemical BV, NL .

**Regalite R-7100** is a partially hydrogenated hydrocarbon resin, commercially available from Eastman Chemical BV, NL .

**1,6-Hexanedioldiacrylate** is a fast curing diacrylate and is obtained from 3M Hilden, Germany (HDA).

**Omnirad BDK** 2,2-dimethoxy-2-phenylacetophenone is a UV-initiator and is available from iGm resins, Waalwijk Netherlands.

**Speedcure BKL** 2,2-dimethoxy-2-phenylacetophenone is a UV-initiator and is available from Lambson, USA.

**Eurocell 300-h** (available by Europerl, Germany) is an expanded perlite , Ø particle size: 75 μm, hydrophobized with silanes.

**3M Glasbubbles (K15)** are hollow glassbubbles with a diameter of 115 μm, available from 3M, Germany.

**Aerosil R-972** are hydrophobic fumed silica particles, available from Evonik, Germany.

<u>Preparation of the liquid precursors:</u>

1. Prep aration of liquid precursor foam :

The liquid precursor of the foam, later referred to as LPF, is prepared by combining the 90wt% of 2-EHA and 10 wt.% of acrylic acid with 0.04 pph of Omnirad as a photoinitiator in a glass vessel. Before the UV exposure is initiated the mixture is flushed 10 minutes with nitrogen and nitrogen is also bubbled into the mixture the whole time until the polymerization process is stopped by adding air to the syrup. All the time the mixture is stirred with a propeller stirrer (300 U/min) and the reaction is stopped when a viscosity of about 2000 mPas is reached (when measured with a Brookfield viscosimeter, T = 25 °C, spindle 4, 12 rpm). Additional 0.16 ppH Omnirad BDK, 0,1 2 ppH HDDA crosslinker, 6 ppH glass bubbles K15 and 6 pph Eurocell 300 -h are added to the syrup and mixed until they have dissolved / dispersed.

2. Preparation of liquid precursor skin layers :

The liquid precursors for the skin layers, later referred to as LPS 1 through LPS 20, are prepared by combining the respective amount of a low Tg acrylate with a low wt% of acrylic acid and with 0.04 pph of Omnirad as a photoinitiator in a glass vessel. Before the UV exposure is initiated the mixture is flushed 10 minutes with nitrogen and nitrogen is also bubbled into the mixture the whole time until the polymerization process is stopped by adding air to the syrup. All the

time the mixture is stirred with a propeller stirrer (300 U/min) and the reaction is stopped when a viscosity of about 11000 mPas is reached (when measured with a Brookfield visc osimeter, T = 25 °C, spindle 4, 12 rpm). Additional 0.16 ppH Omnirad BDK, 0.12 ppH HDDA crosslinker, respective amounts of tackifier and an acrylic comonomer are added to the syrup and mixed until they have dissolved / dispersed.
Table 1 shows an overview of the liquid precursors used for the skin lay er.

Table 1:

| | C 16 - Acrylate | C 18 - Acrylate | IOA | AA | IBOA | NVC | Regalite R-7100 | Regalite R-1125 |
|---|---|---|---|---|---|---|---|---|
| LPS1 | 99,50 | | | 0,50 | | | | |
| LPS 2 | 96,50 | | | 3,50 | | | | |
| LPS 3 | | 99,50 | | 0,50 | | | | |
| LPS 4 | | 96,50 | | 3,50 | | | | |
| LPS 5 | | | 99,50 | 0,50 | | | | |
| LPS 6 | | | 96,50 | 3,50 | | | | |
| LPS 7 | 73,5 | | | 3,50 | 23 | | 8 | |
| LPS 8 | 73,5 | | | 3,50 | 23 | | 15 | |
| LPS 9 | 73,5 | | | 3,50 | 23 | | 23 | |
| LPS 10 | 73,5 | | | 3,50 | 23 | | 30 | |
| LPS 11 | | 73,5 | | 3,50 | 23 | | 8 | |
| LPS 12 | | 73,5 | | 3,50 | 23 | | 15 | |
| LPS 13 | | 73,5 | | 3,50 | 23 | | 23 | |
| LPS 14 | | 73,5 | | 3,50 | 23 | | 30 | |
| LPS 15 | | | 73,5 | 3,50 | 23 | | 8 | |
| LPS 16 | | | 73,5 | 3,50 | 23 | | 15 | |
| LPS 17 | | | 73,5 | 3,50 | 23 | | 23 | |
| LPS 18 | | | 73,5 | 3,50 | 23 | | 30 | |
| LPS 19 | 72,5 | | | 0,5 | 27 | | | |
| LPS 20 | 72,5 | | | 0,5 | 27 | | | 10 |

Coating of liquid precursors and example preparation :

For the preparation of the examples, an in -line application of two or more wet layers to a substrate with subs equent curing is performed as described in specific in the international patent application WO 2011094385(A1). Curing is done by a photochemical method using UV light. The multilayer constructions produced this way are smooth, homogenous and consisted of layers with distinct and reg ular interfaces to each other. No uncontrolled mixing at any time, is observed.
For example preparation, solvent -free siliconized PET release liner Host aphan 2SLK, 75 μm thick, commercially available from Mi tsubishi is used. Liners are introduced into the in -line wet-on wet coating in such a way that they are on either side of the dual layer construction.
In order to obtain the examples the liquid precursors of the skin layers, used for the first pressure sensitive layer of the multilayer construction, are coated at a thickness of approximately 70-90 μm to the bottom of liquid precursors LPF. Hereby LPF represents the backing layer of the multilayer construction with its coating thickness being 1110-1130 μm. All examples are produced at a line speed of the lab coater of 0.71 m/min.
The lab coater have a UV curing station of 3m length, where each zone could be run with a different UV intensity. Curing is effected both from the top, i. e. in a dire ction towards the exposed liquid precursor layer optionally covered with a release liner and from the bottom, i. e. in a direction to wards the substrate whereby the intensities provided in both directions are set at equal levels. The radiation is provided by fluorescent lamps at a wavelength between 300 -

400 nm with a maximum at 351 nm. The total radiation intensity irradiated cumulatively from top and bottom and the respective length of the two coating zones was as listed in table 2:

Table 2:

| | Zone 1 (length 200 cm) | Zone 2 (length 100 cm) |
|---|---|---|
| Total intensity [mW/cm$^2$] | 2.07 | 4.27 |

The UV-radiation curing of the multilayer construction examples is done both, from the top and the bottom side, hereby the UV intensity is set at equal levels in all zones.

The coating unit, were the liquid precursors are filled in, is mounted upstream of the UV-curing station. The liquid precursors are coated on top of each other onto the bottom liner. The top liner is guided through the most down -web chamber of the coating unit.

Construction of examples 1 to 20

Table 3 shows the constructions of examples 1 to 20.

Table 3 :

| Trial | Chamber I | Chamber II |
|---|---|---|
| Ex.1 | LPS 1 | LPF |
| Ex.2 | LPS 2 | LPF |
| Ex.3 | LPS 3 | LPF |
| Ex.4 | LPS 4 | LPF |
| Ex.5 | LPS 5 | LPF |
| Ex.6 | LPS 6 | LPF |
| Ex.7 | LPS 7 | LPF |
| Ex.8 | LPS 8 | LPF |
| Ex.9 | LPS 9 | LPF |
| Ex.10 | LPS 10 | LPF |
| Ex.11 | LPS 11 | LPF |
| Ex.12 | LPS 12 | LPF |
| Ex.13 | LPS 13 | LPF |
| Ex.14 | LPS 14 | LPF |
| Ex.15 | LPS 15 | LPF |
| Ex.16 | LPS 16 | LPF |
| Ex.17 | LPS 17 | LPF |
| Ex.18 | LPS 18 | LPF |
| Ex.19 | LPS 19 | LPF |
| Ex.20 | LPS 20 | LPF |

Chamber I refers to the reservoir from which the first liquid precursor is provided, i.e. upstream from the first coating knife, whereas chamber II refer s to the respective reservoir for the second precursor deposited between the first and second coating knife.

Test results :

The 90°-Peel values of examples 1 (Ex.1) to 6 (Ex.6) on three different automotive clear coats are listed in the three following ta bles (Tables 4 to 6) below. The 90° peel adhesion values are measured after test sample dwell times of 20 minutes or 72 hours at 23°C +/-2°C. Per example two test samples are measured and the results averaged and reported in N/10mm.

Table 4:

| Test panel substrate : UreGloss coated | | | | | | |
|---|---|---|---|---|---|---|
| Dwell time | Ex.1 | Ex.2 | Ex.3 | Ex.4 | Ex.5 | Ex.6 |
| 20 min | 9,86 | 10,72 | 10,79 | 12,79 | 10 | 11,03 |
| 72 h | 11,62 | 13,52 | 12,95 | 16,09 | 11,18 | 13,15 |

Table 5 :

| Test panel substrate : CeramiClear5 coated | | | | | | |
|---|---|---|---|---|---|---|
| Dwell time | Ex.1 | Ex.2 | Ex.3 | Ex.4 | Ex.5 | Ex.6 |
| 20 min | 12,81 | 14,25 | 14,94 | 17,54 | 12,57 | 14,46 |
| 72 h | 13,32 | 17,49 | 19,74 | 23,88 | 14,34 | 16,92 |

Table 6:

| Test panel substrate : VW2K coated | | | | | | |
|---|---|---|---|---|---|---|
| Dwell time | Ex.1 | Ex.2 | Ex.3 | Ex.4 | Ex.5 | Ex.6 |
| 20 min | 14,63 | 16,64 | 18,36 | 21,27 | 13,48 | 17,86 |
| 72 h | 17,75 | 22,00 | 22,65 | 32,84 | 16,93 | 20,79 |

The upper three tables clearly show that the attempt to just solely lower the acrylic acid content does not lead to an improvement of the 90° peel values on automotive clear coats. Hereby the influence of the carbon chain length of the acrylate does not appear to have a significant influence yet.

In the following tables (tables 7 to 9) the 90° peel values are shown to the three different automotive clear coats using a combination of isobornylacrylate and a hydrocarbon tackifier resin while at the same time maintaining a low level of acrylic acid at 3.5 wt%.

Table 7:

| Test panel substrate : UreGloss coated | | |
|---|---|---|
| Ex. No | Dwell time 20 min | Dwell time 72 h |
| Ex.7 | 14,42 | 20,11 |
| Ex.8 | 18,72 | 25,98 |
| Ex.9 | 23,12 | 35,39 |
| Ex.10 | 45,62 | 57,63 |
| Ex.11 | 19,21 | 25,04 |
| Ex.12 | 19,96 | 23,69 |
| Ex.13 | 46,19 | 54,11 |
| Ex.14 | 37,73 | 49,68 |
| Ex.15 | 13,75 | 16,38 |

(continued)

| Test panel substrate : UreGloss coated | | |
|---|---|---|
| Ex. No | Dwell time 20 min | Dwell time 72 h |
| Ex.16 | 15,30 | 18,52 |
| Ex.17 | 16,16 | 19,65 |
| Ex.18 | 16,65 | 18,09 |

Examples 7 to 10 are based on HEDA acrylate (C16) with 23 wt% IBOA and an increasing amount of tackifier resin, whereas examples 11 to 14 ar e based on C18 acrylate and examples 15 to 18 are based on IOA (C8) acrylate. It can clearly be seen from the upper table 7 that the increasing amount of hydrocarbon tackifier resin has little influence or no influence at all on the examples based on IO A (Ex. 15 - Ex. 18) Significant improvement especially with tackifier loadings greater 20 wt% can be seen when using either a C16 or C18 acrylate.

Table 8:

| Test panel substrate : CeramiClear5 coated | | |
|---|---|---|
| Ex. No | Dwell time 20 min | Dwell time 72 h |
| Ex.7 | 19,83 | 23,98 |
| Ex.8 | 24,28 | 30,47 |
| Ex.9 | 27,76 | 32,20 |
| Ex.10 | 46,18 | 44,61 |
| Ex.11 | 23,95 | 34,71 |
| Ex.12 | 23,18 | 30,61 |
| Ex.13 | 37,65 | 53,54 |
| Ex.14 | 28,05 | 49,72 |
| Ex.15 | 17,25 | 19,69 |
| Ex.16 | 19,00 | 22,62 |
| Ex.17 | 20,56 | 24,01 |
| Ex. 18 | 21,35 | 25,66 |

The same effect as in table 7 can be seen on the CeramiClear coat. Samples comprising IOA (C8) show hardly an effect when tackified with a hydrocarbon resin and further do not obtain high peel values at filler loadings greater 20 wt%.

Table 9:

| Test panel substrate : VW2K coated | | |
|---|---|---|
| Ex. No | Dwell time 20 min | Dwell time 72 h |
| Ex.7 | 26,57 | 33,18 |
| Ex.8 | 30,06 | 49,80 |
| Ex.9 | 34,93 | 63,00 |
| Ex.10 | 55,02 | 60,79 |
| Ex.11 | 36,82 | 47,80 |
| Ex.12 | 31,03 | 41,17 |
| Ex.13 | 51,43 | 49,91 |
| Ex.14 | 45,24 | 52,23 |

(continued)

| Test panel substrate : VW2K coated | | |
|---|---|---|
| Ex. No | Dwell time 20 min | Dwell time 72 h |
| Ex.15 | 22,04 | 28,03 |
| Ex.16 | 23,21 | 29,46 |
| Ex.17 | 26,40 | 34,06 |
| Ex.18 | 25,31 | 38,03 |

Also to the VW2K clear coat the same effect as to the previously listed automotive clear coats can be seen. Superior adhesion to low energy surfaces could be obtained by using either a C16 or C18 acrylate in combination with low amounts of acrylic acid and by adding a third comonomer and a tackifier resin.

Previous examples used as (third) comonomer, isobornylacrylate (IBOA). In order to see the effect on 90° peel adhesion using an alternative (third) comonomer examples 19 and 20 are run using N-vinylcaprolactam (NVC). 90° Peel results are shown in the below attached table 10.

Table 10:

| Test substrate | Example No. | Dwell time 20 min | Dwell time 72 h |
|---|---|---|---|
| UreGloss | 19 | 18,56 | 21,21 |
| CeramiClear5 | 19 | 23,38 | 27,17 |
| VW2K | 19 | 29,62 | 33,75 |
| UreGloss | 20 | 20,39 | --- |
| CeramiClear5 | 20 | --- | |
| VW2K | 20 | 27,22 | 34,45 |

From table 10 clearly an effect of the NVC can be seen, especially when comparing the test results with the 90° peel values of examples 1 to 6, which are all made without a (third) comonomer.

The static shear values on two different automotive clear coats UreGloss and Cerami Clear5 for all examples are shown in table 11. Per test substrate 2 sample s are run and the test results averaged and r eported in minutes.

Table 11: Shear values (in minutes)

| Example No. | Test Substrate UreGloss, 70°C | Test Substrate Cerami Clear5, 70°C |
|---|---|---|
| Ex.1 | 37 | 14, |
| Ex.2 | 114 | 31, |
| Ex.3 | 2135 | 286 |
| Ex.4 | 2773 | 2122 |
| Ex.5 | 97 | 40 |
| Ex.6 | 1749 | 1651 |
| Ex.7 | 236 | 44 |
| Ex.8 | 122 | 30 |
| Ex.9 | 63 | 15 |
| Ex.10 | 28 | 8 |
| Ex.11 | 108 | 18 |
| Ex.12 | 202 | 238 |
| Ex.13 | 13 | 4 |

(continued)

| Example No. | Test Substrate UreGloss, 70°C | Test Substrate Cerami Clear5, 70°C |
|---|---|---|
| Ex.14 | 12 | 4 |
| Ex.15 | 265 | 41 |
| Ex.16 | 126 | 28 |
| Ex.17 | 110 | 21 |
| Ex.18 | 34 | 8 |
| Ex.19 | 701 | 10000+ |
| Ex.20 | 442 | 10000+ |

From table 11 one can clearly see that the increase of acrylic acid in the skin layer raises the shear performance of the pressure sensitive adhesive multilayer construction, which was to be expected by theory. In examples 1 to 6 one can further see that especially the use of a C18 acrylate versus IOA leads to an increase of shear strength. This effect though wears off when the formulations get a tackifier resin added to them. It appears that then the shear results are quite comparable between IOA, C16 and C18 acrylate while using IBOA as (third) comonomer. However a significant increase in static shear performance is seen when switching to NVC as additional comonomer, where the shear test results then exceeded a hanging time of 10000 minutes when using Cerami Clear5 coated test panels as substrate.

## Claims

1. A multilayer pressure sensitive adhesive (PSA) film, having a first pressure sensitive adhesive layer and at least one opposing layer, **characterized in that** the first pressure sensitive adhesive layer comprises a pressure-sensitive adhesive composition comprising (co)polymers of :

   a) (meth)acrylate ester of 2 -alkyl alkanols wherein the molar carbon number average of said 2-alkyl alkanols is 12 to 32; and optionally
   b) (meth)acrylate esters of $C_{1-12}$ alkanols; wherein the molar carbon number average of the alkanols of the a) and b) (meth)acrylic acid ester s is 12 to 32

2. The multilayer PSA film of claim 1, **characterized in that** the molar carbon number average of the alkanols of the a) and b) (meth)acrylic acid esters is 12 to 20.

3. The multilayer PSA film of claim 1 or 2, **characterized in that** the pressure sensitive adhesive composition further comprises acid monomer units and/ or non-acid polar monomer units.

4. The multilayer PSA film according to any of the preceding claims, **characterized in that** the (co)polymers comprise b) (meth)acrylate esters of $C_{1-12}$ alkanols.

5. The multilayer PSA film according to any of the pre ceding claims, **characterized in that** the 2-alkyl alkanols are derived from linear alkanols.

6. The multilayer PSA film according to any of the preceding claims, **characterized in that** the 2-alkyl alkanol (meth) acrylate ester is of formula:

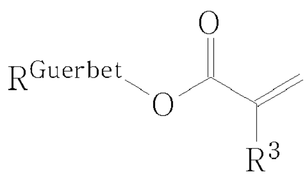
,

wherein $R^{Guerbet}$ is derived from a $C_{12}$-$C_{32}$ 2-alkyl alkanol, and $R^3$ is H or $CH_3$.

7. The multilayer PSA film according to claim 6, **characterized in that** the 2-alkyl alkanol (meth)acrylate ester is of formula:

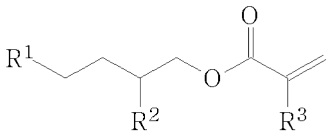

,

wherein $R^1$ and $R^2$ are each independently $C_4$ to $C_{14}$ saturated, and branched or linear alkyl; and $R^3$ is H or $CH_3$.

8. The multilayer PSA film according to any of the preceding claims, **characterized in that** the (co)polymers comprise :

a) 51 to 99 parts by weight of an (meth)acrylic acid ester monomer of 2 -alkyl alkanols;
b) 1 to 49 parts by weight of an (meth)acrylic acid ester of a $C_1$-$C_{12}$ alkanol;
c) 0 to 15 parts by weight of an acid functional ethylenically unsaturated monomer;
d) 0 to 10 parts by weight of a non-acid functional, ethylenically unsaturated polar monomer;
e) 0 to 5 parts by weight of a vinyl monomer; and
f) 0 to 5 parts by weight of a multifunctional (meth)acrylate;
based on 100 parts by weight total monomer.

9. The multilayer PSA film according to claim 8, **characterized in that** the (co)polymers comprise from 5 to 45 parts by weight of a (meth)acrylic acid ester of a $C_1$-$C_{12}$ alkanol.

10. The multilayer PSA film according to claim 8 or 9, **characterized in that** the (co)polymers comprise from 0.1 to 10 parts by weight of an acid functional ethylenically unsaturated monomer.

11. The multilayer PSA film according to any of claims 8 to 10, **characterized in that** the (co)polymers comprise from 0.5 to 10 parts by weight of a non -acid functional, ethylenically unsaturated polar monomer.

12. The multilayer PSA film according to any of claims 8 to 11, **characterized in that** the (co)polymers comprise from 0.05 to 1 parts of a multifunctional (meth)acrylate.

13. The multilayer PSA film according to any of the preceding claims, **characterized in that** the (co)polymer comprises a strongly polar acrylate, which is preferably selected from the group consisting of acrylic acid, methacrylic acid, itaconic acid, hydroxyalkyl acrylates, acrylamides, substituted acrylamides, and any combinations or mixtures thereof.

14. The multilayer PSA film according to claim 13 **characterized in that** the (co)polymer comprises up to 10 weight percent of the strongly polar acrylate , based on 100 parts by weight total monomer, preferably from 0.5 to 10 parts by weight.

15. The multilayer PSA film according to any of the preceding claims, **characterized in that** the (co)polymer comprises isobornyl acrylate, isobornyl methacryl ate and/ or N-vinylcaprolactam.

16. The multilayer PSA film according to any of the preceding claims, **characterized in that** the first pressure sensitive adhesive layer comprises a tackifier, preferably from 3 to 50 parts tackifier relative to 100 parts of said (meth)acrylate ester (co)polymer , more preferably from 5 to 30 parts tackifier relative to 100 parts of said (meth)acrylate ester (co) polymer.

17. The multilayer PSA film according to claim 16, **characterized in that** the tackifier is selected from the group consisting of hydrogenated rosin resins, hydrogenated and esterified rosin resins, hydrogenated terpene resins, aliphatic petroleum resins, aromatic petroleum resins, alicyclic petroleum resins , and any combinations or mixtures thereof .

18. The multilayer PSA film according to any of the preceding claims, **characterized in that** the pressure-sensitive adhesive of the first pressure sensitive adhesive layer, the opposing layer and/ or the intermediate layer has a $T_g$ of $\leq$ -20°C.

**19.** The multilayer PSA film according to any of the preceding claims, ch aracterized in that the (co)polymer comprises a crosslinking agent.

**20.** The multilayer PSA film according to any of the preceding claims , **characterized in that** the opposing layer is a second pressure sensitive adhesive layer.

**21.** The multilayer PSA film according to claim 20, **characterized in that** the multilayer film comprises at least one intermediate layer between the first pressure sensitive adhesive layer and the second pressure sensitive adhesive layer.

**22.** The multilayer PSA film according to any of the preceding claims, **characterized in that** the opposing layer and/ or the intermediate layer comprise a polymer base material chosen from the group consisting of polyacrylates, polyurethanes, polyolefins, polystyrene, natural rubbers, synthetic rubb ers, polyvinylpyrrolidone, and any combinations or mixtures thereof.

**23.** The multilayer PSA film according to any of the preceding claims, **characterized in that** the polymerizable precursor of the polymer base material for forming the opposing layer, comprises 2-octyl(meth)acrylate, wherein said polymerizable precursor preferably comprises from 85 to 99.5 wt%, more preferably from 90 to 99.5 wt% of 2 - octyl(meth) acrylate.

**24.** The multilayer PSA film according to any of the preceding claims, **characterized in that** the pressure-sensitive adhesive composition and/or the polymerizable precursor of the polymer base material for forming the opposing layer and/ or the intermediate layer is at least partly derived from biological material, preferably from a plant material, wherein at least 25 wt. -%, preferably at least 40 wt. -% of said pressure-sensitive adhesive composition and/or said polymerizable precursor of the polymer base material for forming the opposing layer and/ or the intermediate layer are preferably derived from biological material.

**25.** The multilayer PSA film according to any of claim 23 or 24, **characterized in that** the 2-octyl(meth)acrylate is integrally derived from biological material.

**26.** The multilayer PSA film according to any of the preceding claims, **characterized in that** the first pressure sensitive adhesive layer, the opposing layer and/ or the intermediate layer comprise at least one filler material which is preferably selected from the group consisting of filler particles, microspheres, expendable microspheres, preferably pentane filled expendable microspheres or gaseous cavities, glassbeads, glass microspheres, hydrophobic silica type fillers, hydrophilic silica type fillers, fibers, electrically and/or thermally conducting particles, nan o particles, and any combinations or mixtures thereof; and wherein the intermediate layer preferably comprises an aluminium silicate, more preferably expanded perlite.

**27.** The multilayer PSA film according to claim 26, **characterized in that** the expanded perlite expanded perlite particles exhibit a surface modification, which is more preferably chosen from hydrophobic surface modifications and/or a hydrophilic modification.

**28.** The multilayer PSA film according to any of the preceding claims, **characterized in that** the PSA film is provided on at least one of its major surfaces with a release liner.

**29.** A method for manufacturing a multilayer pressure sensitive adhesive film according to any of claims 1 to 28, whereby the first pressure sensitive adhesive layer and the opposing layer are superimposed on one another.

**30.** The method according to claim 29, **characterized in that** the first pressure sensitive adhesive layer and the opposing layer are prepared separately and subsequently laminated to each other.

**31.** The method according to claim 29, **characterized in that** a liquid precursor of the first pressure sensitive adhesive layer and a liquid precursor of the opposing layer are superimposed an d then cured, preferably with actinic radiation or by thermal curing.

**32.** Use of a multilayer pressure sensitive adhesive film according to any of claims 1 to 28 as a PSA film to be bonded with its first pressure sensitive adhesive layer to a LSE substrate surface, preferably to a clear coat surface.

Europäisches Patentamt
European Patent Office
Office européen des brevets

# EUROPEAN SEARCH REPORT

Application Number
EP 11 18 2785

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/109672 A1 (3M INNOVATIVE PROPERTIES CO [US]; ARITA HIROKO [JP]; TAKAMATSU YORINOB) 9 September 2011 (2011-09-09) * page 3, line 31 - page 4, line 14 * * page 6, line 6 - line 14 * * page 8, line 10 - line 22; claims 11-15; examples; table 1 * ----- | 1-32 | INV. C09J7/00 C09J7/02 C09J133/04 |
| X | WO 2009/154856 A1 (3M INNOVATIVE PROPERTIES CO [US]; FUJITA JUN [JP]; TAKAMATSU YORINOBU) 23 December 2009 (2009-12-23) * abstract * * paragraphs [0020] - [0022], [0031] - paragraph [0033]; claims 1,3,4,14,15; examples 4-13,16-18; table 1 * ----- | 1-32 | |
| X | WO 2009/126532 A2 (3M INNOVATIVE PROPERTIES CO [US]; FUJITA JUN [JP]; TAKEDA HIKARU [JP];) 15 October 2009 (2009-10-15) * abstract * * page 6, line 12 - line 18 * * page 12, line 20 - line 31; examples 6,7; table 1 * ----- | 1-32 | TECHNICAL FIELDS SEARCHED (IPC) C09J |

The present search report has been drawn up for all claims

| Place of search | Date of completion of the search | Examiner |
|---|---|---|
| Munich | 6 March 2012 | Meier, Stefan |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 11 18 2785

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2012

| Patent document cited in search report | Publication date | Patent family member(s) | Publication date |
|---|---|---|---|
| WO 2011109672 A1 | 09-09-2011 | JP 2011182847 A | 22-09-2011 |
| | | WO 2011109672 A1 | 09-09-2011 |
| WO 2009154856 A1 | 23-12-2009 | CN 102105551 A | 22-06-2011 |
| | | EP 2291480 A1 | 09-03-2011 |
| | | JP 2009292868 A | 17-12-2009 |
| | | US 2011076492 A1 | 31-03-2011 |
| | | WO 2009154856 A1 | 23-12-2009 |
| WO 2009126532 A2 | 15-10-2009 | CN 101998982 A | 30-03-2011 |
| | | EP 2279229 A2 | 02-02-2011 |
| | | JP 2010163591 A | 29-07-2010 |
| | | KR 20110002857 A | 10-01-2011 |
| | | TW 201005059 A | 01-02-2010 |
| | | US 2011033720 A1 | 10-02-2011 |
| | | WO 2009126532 A2 | 15-10-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4818610 A, Zimmerman
- US 6419797 B, Sherf
- US 7385020 B2
- US 3691140 A, Silver
- US 4166152 A, Baker
- US 4636432 A, Shibano
- US 4656218 A, Kino shita
- US 5045569 A, Delgado
- US 4619979 A
- US 4843134 A, Kotnour
- US 5637646 A, Ellis
- US 5804610 A, Hamer
- WO 2011094385 A1


### Non-patent literature cited in the description


- Technology: An Introduction. Hanser Gardner Publication, 2002
- **A. J. O'LENNICK.** Soap Cosm. Chem. Spec. April 1987, 52
- Solvents. Paint Testing Manual. American Society for Testing and Materials
- A Three -Dimensional Approach to Solubility. *Journal of Paint Technology,* vol. 38 (496), 269-280